# EUROPÄISCHE PATENTANMELDUNG

(11) **EP 2 469 105 A1**
(43) Veröffentlichungstag der Anmeldung: **27.06.2012**
(21) Anmeldenummer: 11195190.1
(22) Anmeldetag: 22.12.2011
(51) Int. Cl.: F16B 5/02, F16B 21/18, F16B 43/00, F16B 41/00

(54) **Gewindezapfen und Verschlusseinrichtung zum Verbinden zweier Bauteile**

(30) Priorität: 23.12.2010 DE 202010016923 U
(71) Anmelder: Fairchild Fasteners Europe - Camloc GmbH, 65761 Kelkheim (Taunus) (DE)
(72) Erfinder: Janofske, Dipl.-Ing. Klemens, 65779 Kelkheim (DE); Jüling, Dieter, 65779 Kelkheim (DE); Vandeputte, Axel, 65779 Kelkheim (DE)
(74) Vertreter: KEIL & SCHAAFHAUSEN Patentanwälte

(57) **Zusammenfassung**

Die Erfindung bezieht sich auf einen Gewindezapfen zur Verbindung zweier Bauteile (12, 13) mit einem verbreiterten Kopfabschnitt (2) und einem zumindest bereichsweise hohlen Schaft (4). In dem Schaft (4) ist ein Innengewindeabschnitt (9) vorgesehen und die Außenmantelfläche des Schaftes (4) ist zumindest abschnittsweise derart konisch ausgebildet, dass sich der Außendurchmesser des Schaftes (4) in einer von dem Kopfabschnitt (2) wegweisenden Richtung verjüngt. Das dem Kopfabschnitt (2) entfernte Ende des Schaftes (4) ist mit einem Vorsprung (7) ausgebildet, wobei ein elastisch aufweitbarer, insbesondere mäanderförmiger, Haltering (8, 29) verschiebbar auf dem Schaft (4) vorgesehen ist. Weiter betrifft die Erfindung eine Verschlusseinrichtung zum Verbinden wenigstens zweier insbesondere plattenförmiger Bauteile.

## Beschreibung

Die Erfindung bezieht sich auf einen Gewindezapfen zur Verbindung zweier Bauteile mit einem verbreiterten Kopfabschnitt und einem zumindest bereichsweise hohlen Schaft. Weiter betrifft die Erfindung eine Verschlusseinrichtung zum Verbinden wenigstens zweier insbesondere plattenförmiger Bauteile.

Eine solche Verschlusseinrichtung weist bspw. einen Gewindezapfen, der an einem ersten Bauteil unverlierbar befestigbar ist, und ein an der Rückseite eines zweiten Bauteils anordbares Aufnahmeelement auf, wobei der Gewindezapfen einen Kopfabschnitt zur Abstützung an dem ersten Bauteil und einen durch zueinander ausgerichtete Öffnungen der Bauteile hindurchführbaren Schaft zum Einführen in das Aufnahmeelement aufweist. Der Schaft kann zum Verspannen der Bauteile einen Gewindeabschnitt zum Zusammenwirken mit einem Gegengewindeabschnitt in dem Aufnahmeelement aufweisen. Vorzugsweise verjüngt sich der Schaft in Richtung seines vom Kopfabschnitt abgewandten Endes zumindest bereichsweise konusförmig und weist einen radial erweiterten Endabschnitt auf. Zum Verhindern eines vollständigen Herausziehens des Gewindezapfens aus dem ersten Bauteil ist auf dem Schaft ein Haltering angeordnet, der relativ zum Gewindezapfen entlang seiner Längsachse bewegbar ist, und in Richtung auf den Kopfabschnitt zumindest bereichsweise zunehmende Klemmkraft auf den Gewindezapfen ausübt.

Gattungsgemäße Verschlusseinrichtungen dienen vor allem zur lösbaren Befestigung von Verbindungen, die hohen Zug- und Scherbanspruchungen sowie Vibrationen ausgesetzt sind. Verwendung finden diese insbesondere im Flugzeugbau, wo mit diesen Verschlusseinrichtungen Panele und Abdeckplatten befestigt werden können, aber auch Verkleidungen und Wartungsklappen. Diese Einsatzbedingungen setzen hohe Anforderungen an die Verschlusseinrichtungen, denn sie sind einer großen Anzahl von Lastwechseln ausgesetzt, wobei die einzelnen Kräfte verhältnismäßig hohe Werte annehmen können. Die Verschlusseinrichtungen zeichnen sich aber auch dadurch aus, dass von ihnen gefordert wird, sich einfach Öffnen und Schließen zu lassen. Aufgrund der hohen Sicherheitsanforderungen im Flugzeugbau und zum Zweck eines schnellen Öffnen und Schließens sind die Verschlusseinrichtungen mit einer Verliersicherung versehen, die verhindert, dass der Gewindezapfen vollständig aus der Flugzeugklappe oder dem Panel herausgezogen werden kann und verloren geht. Darüber hinaus stellt die einsatzbedingte hohe Frequenz von Schließ und Öffnungsvorgängen hohe Anforderungen an die Dauerhaltbarkeit der Verschlusseinrichtung.

Aus der US 3,271,774 ist eine Verschlusseinrichtung mit einem Gewindezapfen bekannt, dessen Schaft durch eine in einem ersten Bauteil ausgebildete Öffnung gesteckt ist. Der Schaft weist an seinem vom Kopfabschnitt des Gewindezapfens abgewandten Ende einen sich verjüngenden Abschnitt auf, der in einem radial erweiterten Endabschnitt endet. Zwischen diesem Konusabschnitt und dem radial erweiterten Endabschnitt ist ein Haltering auf dem Schaft angeordnet, der ein Herausfallen des Gewindezapfens aus dem ersten Bauteil verhindert. Der Haltering ist in einer Vertiefung auf der Unterseite des ersten Bauteils angeordnet und wird in einer Ausnehmung durch ein mit dem ersten Bauteil in schnappender Weise verbundenes Halteelement in der Ausnehmung gehalten. Zum Verspannen des ersten Bauteils mit einem zweiten Bauteil werden die Bauteile mit ihren Öffnungen aufeinander und der Schaft durch die Öffnungen gedrückt. Unterhalb des zweiten Bauteils ist ein Aufnahmeelement mit einem Innengewinde angeordnet. Der Schaft ist mit einem entsprechenden Außengewinde versehen, das in das Innengewinde des Aufnahmeelements geschraubt wird, wodurch Gelenkzapfen und Aufnahmeelement mit den dazwischen liegenden Bauteilen miteinander verspannt werden.

Während des Verbindens der beiden plattenförmigen Bauteile, wird der Gewindezapfen durch das Loch in dem ersten Bauteil geschoben. Damit der Gewindezapfen auch durch den Haltering geschoben werden kann, der nicht in das zweite Bauteil eintaucht, sind die Gewindeflanken des Außengewindes auf dem Schaft des Gewindezapfens flach ausgebildet. Dadurch soll ein leichtgängiges Durchschieben des Gewindezapfens erreicht werden. Es kann an diesen Stellen jedoch zu Verkantungen an den Gewindeflanken kommen. Da der Haltering zudem eine Klemmkraft auf die Gewindeflanken ausübt, besteht die Gefahr, dass das Halteelement beim Eindrücken des Gewindezapfens in das erste Bauteil aus seiner Verankerung gelöst und die Verschlusseinrichtung beschädigt wird. Zudem kann es bei häufiger Anwendung der Verschlusseinrichtung zu Verschleißerscheinungen an den Gewindeflanken des Außengewindes kommen, wodurch die dauerhafte Funktionalität der Verschlusseinrichtung nicht gewährleistet bleiben kann. Hinzu kommt, dass die manuelle Verschiebbarkeit, insbesondere das Zurückschieben des Gewindezapfens zur Vorbereitung des Schließen eines Panels, kraftaufwändig ist.

Weiter ist aus der DE 103 19 930 B4 eine Verschlusseinrichtung bekannt, bei welcher der Gewindezapfen gegen unerwünschtes Lösen, bspw. in Folge von Vibrationen, in dem Aufnahmeelement gesichert ist.

Es ist eine Aufgabe der vorliegenden Erfindung, einen Gewindebolzen sowie eine Verschlusseinrichtung der eingangs genannten Art vorzuschlagen, die bei leichterer Bedienbarkeit eine zuverlässige Sicherung des Gewindezapfens gegen Verlieren ermöglicht.

Diese Aufgabe wird erfindungsgemäß durch einen Gewindezapfen nach Anspruch 1 bzw. eine Verschlusseinrichtung nach Anspruch 4 gelöst. Dabei wird vorzugsweise der Gewindeabschnitt durch ein in den Schaft eingebrachtes Innengewinde gebildet, wobei der Gegengewindeabschnitt durch ein auf das Innengewinde abgestimmtes Außengewinde gebildet wird. Nach einer bevorzugten Ausführungsform der Erfindung ist hierzu in dem Aufnahmeelement ein Gewindebolzen mit einem Außengewindeabschnitt vorgesehen. Wenn die äußere Umfangsfläche des Schaftes im Wesentlichen glatt ist, lassen sich der Gewindezapfen in dem ersten Bauteil und insbesondere auch der Haltering auf dem Schaft des Gewindezapfens einfach verschieben, ohne dass die Funktionalität des Befestigungsmittels beeinträchtigt wird oder der Gewindezapfen verloren geht.

Der Gewindezapfen kann abschnittsweise auch zylinderförmig ausgebildet sein, wobei die Länge des zylinderförmigen Abschnitts derart bemessen ist, dass wenigstens das zweite Bauteil den zylinderförmigen Abschnitt umgibt, wenn die Bauteile miteinander verspannt sind. Mit anderen Worten taucht der zylindrische Abschnitt in die Öffnungen beider Bauteile ein, um so Querkräfte, die zwischen den Platten wirken, effektiv durch den Gewindebolzen abzustützen und diesen nicht zu beschädigen.

Wenn in dem Aufnahmeelement eine Blockiereinrichtung vorgesehen ist, kann eine relative Verdrehung zwischen dem Gewindezapfen und dem Aufnahmeelement so erschwert werden, dass sich die Schraubverbindung nicht durch Vibrationen oder dgl. löst. Dies kann insbesondere dadurch erreicht werden, dass in dem Aufnahmeelement zwei profilierte, bspw. gezahnte, Scheiben vorgesehen sind, von denen eine drehfest mit dem Aufnahmeelement und die andere drehfest mit dem Gewindezapfen verbunden ist. Eine relative Drehung der profilierten Scheiben und damit eine relative Verdrehung zwischen dem Gewindezapfen und dem Aufnahmeelement lässt sich durch eine die beiden Scheiben zusammenpressende Feder verhindern bzw. erschweren.

Es hat sich als besonders vorteilhaft herausgestellt, wenn der Außendurchmesser des Haltering im Verhältnis zur Aufnahmebohrung groß ist. In diesem Fall bietet insbesondere ein Haltering, der als mäanderförmiges Ringband ausgebildet ist, eine große Auflagefläche, die beim Verspannen der Platten genutzt werden kann. Dadurch lässt sich auch der Ring als kraftübertragendes Spannelement nutzen, was die Effektivität der Verschlusseinrichtung erhöht. Trotz der Fähigkeit, hohe Kräfte aufzunehmen, erweist sich die Mäanderform als vorteilhaft, denn das Ringband übt Klemmkräfte auf den Schaft aus, die den sicheren Halt garantieren, ohne jedoch so stark zu sein, dass der Schaft beschädigt bzw. das Verschieben des Rings auf dem Schaft verhindert wird.

In Weiterentwicklung des Erfindungsgedankens bietet ein offener Haltering mit zwei Ringenden, bei dem der Mittelpunkt des Krümmungsradius im Bereich der Ringenden gegenüber dem Mittelpunkt des übrigen Halterings versetzt ist und/oder die Ringenden einen anderen Krümmungsradius aufweisen als der übrige Haltering, besondere Vorteile. Durch eine solche Ausgestaltung wird ein großflächigerer Auflagebereich für den Ring am Schaft gebildet. Das verhindert, dass beim Verschieben des Rings auf dem Schaft Verschleißerscheinungen entstehen insbesondere, dass der Ring entlang des Schaftes kratzt bzw. schleift und sich Riefen oder ähnlichen Beschädigungen am Schaft bilden. Mit anderen Worten ist durch diese Ausgestaltung der Ring nicht vollständig kreisrund ausgebildet, sondern hat einen den beiden Ringenden gegenüberliegenden kreisrunden Abschnitt sowie zwei an die Ringenden angrenzende Bereiche, in denen der Krümmungsmittelpunkt zu dem kreisrunden Abschnitt versetzt ist und/oder der Krümmungsradius verändert, insbesondere vergrößert, ist.

Andere Halteelemente, die rein konzentrisch gestaltet sind, sind nicht in der Lage, diese vorteilhafte Kombination von Klemmkraft und Auflagefläche zu bieten.

Eine weitere Ausführungsform sieht vor, dass der Ring auch auf dem Bereich des Zapfens mit dem kleinsten Durchmesser noch eine gewisse Vorspannung aufweist. Dadurch wird sichergestellt, dass auch im gelösten Zustand zweier Bauteile der Gewindezapfen stets unverlierbar in dem Bauteil gesichert ist.

Das Ringband kann nach einer weiteren vorteilhaften Ausbildungsform so ausgebildet sein, dass es über wenigstens vier im Wesentlichen als Kreissegmente ausgebildete Abschnitte verfügt, welche durch gleichmäßig über den Umfang des Halterings verteilte, radial nach außen vorspringende Ausbuchtungen verbunden sind. Die Ausbuchtungen erstrecken sich im Wesentlichen gradlinig radial nach außen und werden durch einen Abschnitt geschlossen, der einen konstanten Innen- und/oder Außenradius aufweist. Ein solches Ringband lässt sich beispielsweise auf einfache und preiswerte Weise aus Kunststoff fertigen und bietet mit Hinblick auf die Oberfläche des Gewindezapfens ein besseres Verschleißverhalten. Eine ideale Kombination von Spannkräften, Abstützkräften und preiswerter Fertigung wird dann erreicht, wenn die Summe der Sektorwinkel, die kreisförmig um den Mittelpunkt des Ringbandes von den Segmenten beansprucht wird, größer ist als die Summe der Sektorwinkel, die von den Ausbuchtungen beansprucht wird.

Weiterhin ist es nach einer Ausgestaltung der Erfindung vorgesehen, dass das Ringband ein offenes Ringband ist, wodurch sich der Haltering einfach durch Auseinanderbiegen der beiden Enden auf dem Schaft montieren lässt.

In Weiterbildung des Erfindungsgedankens kann die Verschlusseinrichtung über eine Führungshülse verfügen, die den Gewindezapfen umgibt und zur Anlage an den Kopfabschnitt ausgebildet ist. Die Führungshülse verfügt ferner über eine Ringnut zur Aufnahme des Halterings. So wird ein besonders einfache Montage realisiert.

Eine weitere vorteilhafte Ausführungsform sieht vor, dass der Außendurchmesser des Endabschnitts größer ist als Innendurchmesser des Halterings in seinem entspannten Zustand. So wird sichergestellt, dass sich der Haltering nicht in unbeabsichtigter Weise vom Schaft löst.

Die Erfindung wird nachfolgend anhand eines Ausführungsbeispiels und der Zeichnung näher erläutert. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbezügen.

Es zeigen schematisch:
- Fig.1: einen erfindungsgemäßen Gewindezapfen mit Haltering in einer Seitenansicht;
- Fig. 2: den Haltering aus Fig. 1 in einer Draufsicht;
- Fig. 3: eine Draufsicht A-A der Fig. 1;
- Fig. 4a bis c: eine schematische Darstellung des Verbindens und Lösens einer erfindungsgemäßen Verschlusseinrichtung;
- Fig. 5: eine weitere Ausführungsform des Halterings in einer Draufsicht;
- Fig. 6: eine weitere Ausführung der Verschlusseinrichtung mit Führungshülse; und
- Fig. 7: eine weitere Ausführungsform des Halterings in einer Draufsicht.

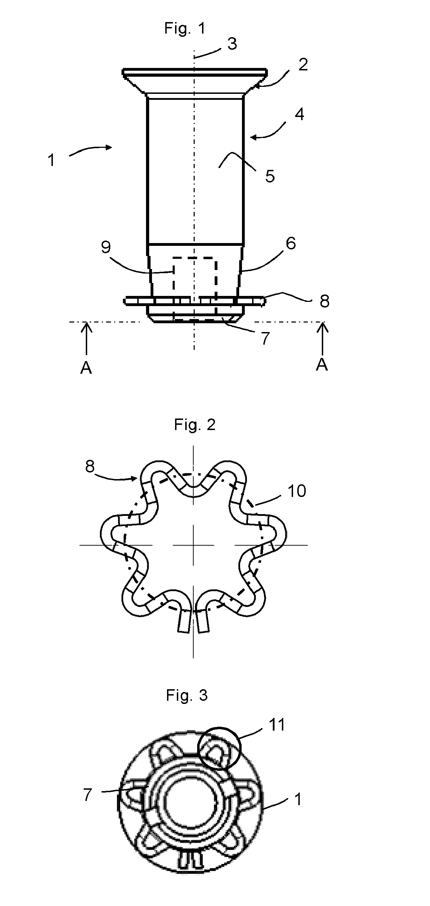

In Fig. 1 ist der Gewindezapfen 1 einer Verschlusseinrichtung dargestellt, der an seinem einen Ende einen Kopfabschnitt 2 zum Abstützen an einem Bauteil aufweist. Hierzu weist der Kopfabschnitt zu seinem Ende hin schräg bzw. konisch verlaufende Flanken auf, die in der Lage sind, Kräfte aufzunehmen und den Gewindezapfen 1 entlang seiner Längsachse 3 mit einem in Fig. 1 nicht dargestellten Aufnahmeelement zu verspannen. Auf der Oberseite des Kopfabschnittes 2 sind nicht dargestellte Mittel zum Ansetzen eines Werkzeugs, wie einem Schraubendreher, ausgebildet, wodurch sich der Gewindezapfen um seine Längsachse 3 drehen lässt. An den Kopfabschnitt 2 schließt ein Schaft 4 mit im Wesentlichen glatter äußerer Umfangsfläche an, der ausgehend vom Kopfabschnitt 2 von einem zylinderförmigen Abschnitt 5 in einen konusförmigen Abschnitt 6 übergeht, der sich zu dem Ende des Gewindezapfens, das dem Kopfabschnitt 2 gegenüberliegt, verjüngt. Die Längen des zylinderförmigen Abschnitts 5 und des konusförmigen Abschnitts 6 können je nach Verwendungsart beliebig gewählt werden. Am Ende des konusförmigen Abschnitts 6 geht der Schaft in einen flanschartigen Endabschnitt 7 bzw. Vorsprung über, der gegenüber dem konusförmigen Abschnitt 6 radial erweitert ist. Der Außendurchmesser des Endabschnitts 7 entspricht dabei in der dargestellten Ausführungsform etwa dem Außendurchmesser des zylinderförmigen Abschnitts 5.

Das dem Kopfabschnitt 2 gegenüberliegende Ende des Gewindezapfens 1 weist zudem eine durch gestrichelte Linien angedeutete Öffnung auf, die über einen Gewindeabschnitt in Form eines Innengewindes 9 verfügt. Die Tiefe bzw. die Breite der Öffnung bzw. des Innengewindes ist variabel und kann nach Einsatzart frei gewählt werden.

Auf dem konusförmigen Abschnitt 6, angrenzend an den Endabschnitt 7, ist ein Haltering in Form eines mäanderförmigen Ringbandes 8 angeordnet. Fig. 2 zeigt das mäanderfömige Ringband 8 aus Fig. 1 in einer Draufsicht. Das Halteelement ist so ausgebildet, dass es entlang des mittleren Umfangs 10 sinusförmig verläuft, d.h. Abschnitte mit großem bzw. kleinem Umfang wechseln sich gegenseitig ab. Der Ring 8 ist in seinem in Fig. 2 unteren Bereich durchbrochen, das bedeutet er ist nicht geschlossen. An dieser Stelle kann der Ring mit einem geeigneten Werkzeug oder auch per Hand flexibel auseinandergebogen und in einfacher Weise auf dem Schaft 4 montiert werden. Der Innendurchmesser des Ringbands 8 ist derart auf den Schaft 4 abgestimmt, dass das Ringband 8 in seinem unbelasteten Zustand einen durch die inneren Abschnitte mit kleinem Umfang definierten Innendurchmesser beschreibt, der kleiner als der Außendurchmesser des flanschartigen Vorsprungs bzw. Endabschnitts 7 ist.

Wenn der Ring 8 auf dem Schaft 4 translatorisch hin und her bewegt wird, muss er sich aufgrund der unterschiedlichen Durchmesser des zylinderförmigen Abschnitts 5 und der konusförmigen Abschnitts 6 radial ohne großen Aufwand erweitern können, damit der Schaft 4 nicht beschädigt wird. Aufgrund seiner mäanderförmigen Ausbildung ist der Ring stets flexibel und kann in einfacher Weise auseinander gedehnt werden. Zugleich übt er jedoch eine radial nach innen wirkende Klemmkraft auf den Schaft 4 aus, die jedoch nicht so groß ist, dass der Schaft 4 beschädigt wird. Er lässt sich dadurch leicht auf dem Schaft 4 verschieben.

Wie die in der Fig. 3 dargestellte Draufsicht A-A aus Fig. 1 zeigt, stellt die mäanderförmige Ausbildung des Halteelements einen Auflagebereich 11 zur Verfügung, der sich radial vom Gelenkzapfen 1 erstreckt. Trotz des geringes Materialbedarfs für den Ring und der geringen Klemmkräfte, die der Ring 8 auf den Schaft 4 ausübt, ist die wirksame Auflagefläche so ausgebildet, dass sie große Spannkräfte aufnehmen kann, ohne dass der Ring 8 beschädigt oder so verzogen wird, dass er auf dem Schaft verklemmt. Wie ferner zu erkennen ist, ist der Außendurchmesser des Ringbandes 8 so gewählt, dass er im Wesentlichen dem Außendurchmesser des Kopfabschnitts entspricht.

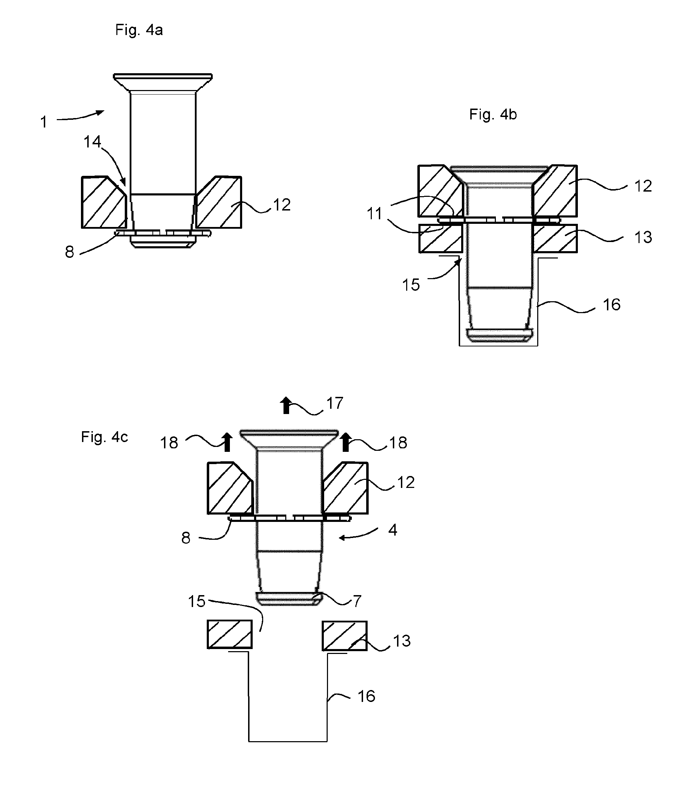

Die Figuren 4a bis 4c zeigen schematisch, wie zwei plattenförmige Bauteile 12 und 13 über die Verschlusseinrichtung verbunden werden können, bzw. wie diese Verbindung gelöst wird. In Fig. 4a ist der Gewindezapfen mit dem ersten Bauteil 12 verbunden, welches eine Öffnung 14 aufweist, durch die der Schaft 4 des Gelenkzapfens 1 hindurchgeführt ist. Der Gewindezapfen 1 lässt sich in der Öffnung 14 axial hin- und her verschieben. Der auf den Schaft 4 aufgesetzte Haltering 8, dessen Durchmesser größer ist, als der Durchmesser der Öffnung 14, verhindert, dass der Gelenkzapfen 1 in Richtung des Kopfabschnitts 2 vollständig aus dem ersten Bauteil 12 herausgezogen werden kann. In entgegengesetzter Richtung wird dies durch den Kopfabschnitt 2 unterbunden, dessen Außendurchmesser ebenfalls größer ist, als die Öffnung 14.

Zum Verbinden zweier Bauteile 12 und 13 wird das erste plattenförmige Bauteil 12 auf das zweite plattenförmige Bauteil 13 gelegt, das ebenfalls über eine Öffnung 15 verfügt, so dass die Öffnungen 14 und 15 der Bauteile 12 und 13 fluchten. Wie in Fig. 4c schematisch angedeutet, ist auf der Rückseite des zweiten Bauteils eine Aufnahmeelement 16 angeordnet, das in seinem Inneren über ein zu dem Gewindeabschnitt des Gelenkzapfens passenden Gewindeabschnitt in Form eines Außengewindes eines nicht dargestellten Gewindebolzens verfügt, welches mit dem Innengewinde 9 des Gelenkzapfens 1 verschraubt werden kann. Das Aufnahmeelement 16 ausgebildet, dass es sich an der Unterseite des zweiten Bauteils 13 abstützen und drehfest mit diesem verbunden werden kann.

Fig. 4b zeigt einen Zustand, in dem der Gewindezapfen 1 mit dem Schaft 4 voran durch die Öffnungen 14 und 15 gesteckt ist. Der Durchmesser des mäanderförmigen Ringbandes 8 ist größer als die Öffnung 15 des zweiten Bauteils 13, so dass er sich an der oberen Fläche des zweiten Bauteils 13 abstützt und nicht in die Öffnung 15 eintauchen kann. Stattdessen ist das Ringband 8 auf dem Schaft 4 in Richtung des Kopfabschnitts 2 gewandert, wobei es sich radial erweitert hat und beidseitig große Abstützflächen 11 ausbildet. Für den Verschiebevorgang und das Einschieben des Gelenkzapfens 1 in das zweite Bauteil 13 sind keine großen Kräfte notwendig, weil der Schaft 4 auf seiner Außenseite glatt ist und das Ringband 8 auf diesem leicht zu verschieben ist.

Die Gewinde in Aufnahmeelement 16 und Gewindezapfen 1 sind miteinander verschraubt, wodurch Aufnahmeelement 16 und Gewindezapfen 1 miteinander verspannt sind und so die Bauteile 12 und 13 gegeneinander verspannen. In der Darstellung ist das Ringband 8 mit großer Auflagefläche 11 zwischen den plattenförmigen Bauteilen 12 und 13 verspannt. Es ist aber auch möglich, dass das zweite Bauteil 13 auf der Oberseite oder das erste Bauteil 12 an seiner Unterseite über eine Aussparung verfügt, in die das Ringband 8 eintauchen kann, wodurch die Flächen der Bauteile unmittelbar aneinander liegen. In diesem Zustand kann eine in den Figuren nicht dargestellte Blockiereinrichtung ein Verdrehen des Gewindezapfens 1 in dem Aufnahmeelement 16 verhindern und somit die dauerhafte Verspannung der Bauteile 12 und 13 sicherstellen.

Das Lösen der Verschlusseinrichtung zeigt die Fig. 4c. Der Verbindung zwischen Aufnahmeelement und Gewindezapfen wird, ggf. gegen die Haltekraft der Blockiereinrichtung, gelöst und das Bauteil 12 vom Bauteil 13 entfernt. Beim Lösen der Verbindung, z. B. durch Herausschrauben des Gelenkzapfens 1, kann sich dieser relativ zum ersten Bauteil 12 bewegen, was durch den Pfeil 17 angezeigt ist.

Dabei stützt sich das Ringband 8 an der Unterseite des ersten Bauteils 12 ab. Aufgrund der geringen Klemmkräfte erlaubt es das Ringband 8, dass der Gelenkzapfens 1 sich leicht relativ zum ersten Bauteil 12 bewegen kann. In Kombination mit der glatten Oberfläche des Schaftes 4 kommt es nicht zum Verklemmen und der Gelenkzapfen wird nicht beschädigt. Nach Lösen der Gewindeverbindung kann das erste Bauteil 12 vom zweiten Bauteil 13 entfernt werden, was durch die Pfeile 18 angedeutet ist. Dabei wird durch Schaft 4 aus der Öffnung 15 gezogen.

Nach dem Lösen der Bauteile 12 und 13 verhindert das Ringband 8, dass der Gelenkzapfen 1 vollständig aus dem ersten Bauteil 12 in Richtung Kopfabschnitt 2 herausgezogen werden kann. Der Endabschnitt 7 verhindert wiederum, dass sich das Ringband 8 vom Schaft 4 löst. Bei einem erneuten Verbinden der Bauteil 12 und 13 kann der Gelenkzapfen 1 mit geringem Kraftaufwand wieder nach vorne in das erste Bauteil gedrückt und das Ringband 8 auf dem Schaft verschoben werden, was ein besonders einfaches Verbinden der Bauteile ermöglicht.

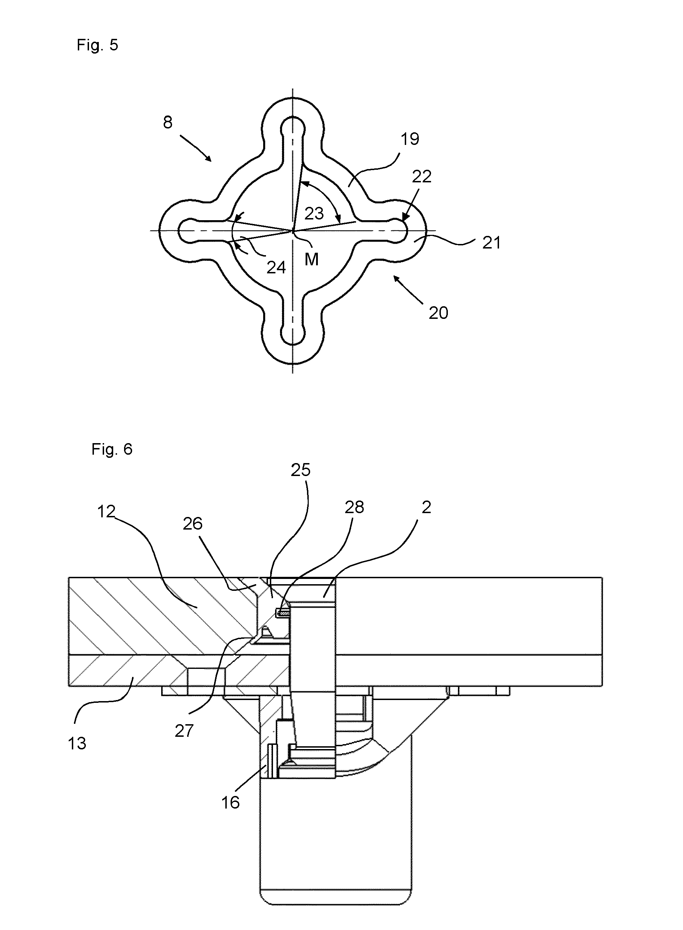

Die in Fig. 5 gezeigte Ausführungsform des Ringbandes 8 zeichnet sich durch einen besonderen mäanderförmigen Verlauf aus. Es verfügt zunächst über vier als Kreissegmente 19 ausgebildete Abschnitte, die gleichmäßig um den Umfang des Ringbandes 8 verteilt sind. Der Innendurchmesser bzw. die Innenform dieser Kreissegmente 19 ist auf die Außenform des Zapfens abgestimmt. Zwischen zwei Kreissegmenten sind radial nach außen vorspringende Ausbuchtungen 20 ausgeformt. Diese erstrecken sich zunächst gradlinig bzw. radial nach außen von den Kreissegmenten 19 weg und enden in einem rund ausgebildeten Abschnitt 21. Dieser Abschnitt 21 schließt die geradlinigen Erstreckungen, wodurch die in der Fig. 5 dargestellten Kreissegmente 19 miteinander verbunden werden. Der Abschnitt 21 ist rund bzw. kreissegmentförmig ausgebildet und weist in dem gezeigten Ausführungsbeispiel einen konstanten Innen- und Außenradius 22 auf. Durch die Ausbuchtungen 20 und die runden Abschnitte 21 werden Spannungen in der Ringbandstruktur erheblich vermindert und die Lebensdauer verbessert. Verbindet man die Mittelpunkte der Radien 22 zweier gegenüberliegender Abschnitt 21 miteinander, was durch die gestrichelten Linien angedeutet ist, treffen sich die zwei Linien eines Ringbandes im Mittelpunkt M.

Wie die Figur weiter zeigt, erstrecken sich die Kreissegmente 19 kreisförmig um den Mittelpunkt M über einen Sektorwinkel 23, bevor das Ringband 8 in die Ausbuchtung 20 übergeht. Auch die Ausbuchten 20 nehmen einen Abschnitt rund um den Mittelpunkt M in Anspruch, und zwar jeweils über einen Winkelbereich, der mit dem Sektorwinkel 24 gekennzeichnet ist. Wie aus Fig. 5 ersichtlich, ist die Summe der Sektoren 23, die von den allen vier Kreissegmenten 19 beansprucht wird, größer als die Summe der Sektoren 24, welche die vier Ausbuchtungen 20 beinhalten. Auf diese Weise lässt sich ein Ringband realisieren, das große Kräfte in axialer Richtung des Gewindebolzens aufnehmen kann und das optimale Spannkräfte auf den Gewindezapfen ausüben kann, ohne dass dieser verschlissen wird. Auch dieser Ring kann an geeigneten Stellen offen sein, um sich auf einfache Weise befestigen zu lassen.

In Fig. 6 ist eine Verschlusseinrichtung dargestellt, die zusätzlich über eine Führungshülse 25 verfügt. Die Führungshülse 25 umgibt den Gewindezapfen und insbesondere den Kopfabschnitt 2, wobei die Führungshülse entsprechender konische Außenform des Kopfabschnitts 2 ausgebildet ist. In der dargestellten Ausführungsform ist die Führungshülse in das erste Bauteil 12 eingesetzt und verfügt über einen weiteren konischen Abschnitt 26, der sich radial und nach oben (Richtung Kopfende) erweitert und der an einem entsprechend konischen Abschnitt des Bauteils 12 anliegt. Durch diese Konstruktion werden Spannkräfte vom Gewindezapfen durch die Führungshülse 25 in das erste Bauteil 12 geleitet. In Richtung des zweiten Bauteils 13 geht die Führungshülse in einen weiteren schrägen Abschnitt 27 über, der sich ebenfalls radial erweitert. Dadurch ist die Führungshülse 25 fest in dem ersten Bauteil 12 durch die konischen Abschnitte 26 und 27 gehalten. Die Führungshülse ist innenseitig zum Gewindezapfen hin mit einer kreisförmigen Nut 28 ausgestattet, in der das Ringband 8 angeordnet ist und den Gewindezapfen umgibt.

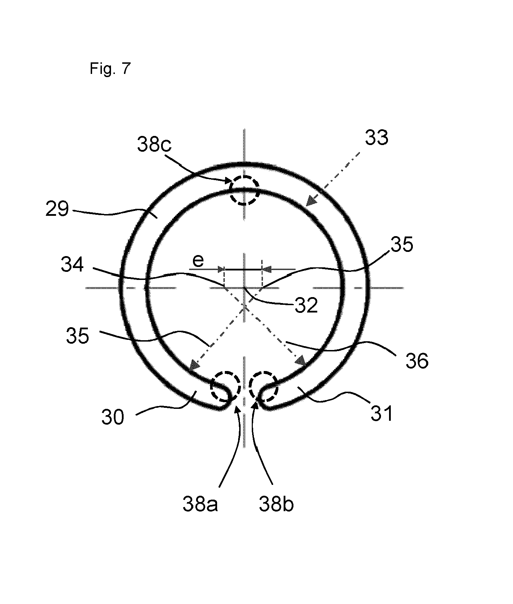

Fig. 7 zeigt einen offenen Haltering 29, der im unteren Bereich durchbrochen ist, so dass der Ring zwei Ringenden 30, 31 vorweist. Der Ring 29 lässt sich aufdehnen, d.h., die Ringenden 30, 31 können auseinander gezogen werden, so dass sie sich voneinander entfernen und der Ring 29 aufgeweitet wird. Der Haltering 29 besitzt zunächst einen vom Mittelpunkt 32 des Rings 29 ausgehenden Krümmungsradius 33. Dieser bezieht sich auf die innere Fläche des Rings 29, die dem Schaft eines nicht dargestellten Gewindezapfens zugewandt ist, über den der Ring 29 geschoben wird. Die Ringenden 30, 31 sind abweichend vom übrigen Ring ausgebildet. Sie weisen eine vom übrigen Ring 29 divergierende Krümmung auf. Diese entsteht dadurch, dass die Krümmungsmittelpunkte 34, 35 der Krümmungsradien 36, 37 der Ringenden 30, 31 gegenüber dem Mittelpunkt 31 des übrigen Rings versetzt angeordnet sind.

Der Mittelpunkt 34 gehört zum Krümmungsradius 36 des in der Figur 7 dargestellten rechten Ringendes 31 und ist links vom Mittelpunkt 32 des übrigen Rings 29 angeordnet. Zusätzlich ist der Krümmungsradius 36 größer als der Radius 33 des übrigen Rings. Das gilt auch für das linke Ringende 30. Der Mittelpunkt 35 gehört zum Krümmungsradius 36 des linken Ringendes 30 und ist rechts vom Mittelpunkt 32 des übrigen Rings 29 angeordnet. Die Mittelpunkte 34, 35 sind im Abstand e zueinander angeordnet. Der Abstand der Mittelpunkte 34, 35 zum Mittelpunkt 31 kann unterschiedlich sein, wodurch sich die Verformung des Rings 29 gezielt einstellen lässt. Infolge der vom Mittelpunkt 32 verschobenen Mittelpunkte 34 und 35 ist der Auslauf der Ringenden nicht mehr konzentrisch zum Mittelpunkt 32 sondern etwas aufgeweitet.

Die an die Ringenden 30, 31 angrenzenden Bereiche mit anderem Krümmungsradius bzw. anderem Krümmungsmittelpunkt können sich bspw. um bis zu 90° des Ringumfangs erstrecken, insbesondere weniger als etwa 45°.

Die Wirkung dieser Ausgestaltung zeigt sich mit Hinblick auf einen gewöhnlichen konzentrisch ausgebildeten Retainingring. In der Fig. 7 sind mit gestrichelten Kreisen punktuelle Auflagen 38a, 38b, 38c angedeutet, die bei einem herkömmlichen Ring die Auflage- bzw. Kontaktpunkte bilden, über die ein solcher Ring an einem Schaft anliegt, wenn der Ring geweitet und über den Schaft geschoben wird. An diesen Punkten 38a, 38b, 38c wirken Kräfte an dem Ring punktförmig auf den Schaft. Infolge einer solchen Punktbelastung unterliegt der Schaft erhöhten Verschleißerscheinungen, wenn der Ring am Schaft entlangschleift. Die Kräfte an den Punkten 38a, 38b, 38c können derart groß werden, dass sich der Ring regelrecht in den Schaft hineinkrallt und tiefe Furchen hinterlässt.

Durch die spezielle Ausbildung der dargestellten Ringenden werden solche Kräfte kompensiert. Die veränderte Krümmung der Ringenden 30, 31 führt dazu, dass sich der Ring 29 an den Schaft anschmiegt, wenn dieser beim Aufschieben auf den Schaft geweitet wird. Zwischen Ring 29 und Schaft ergeben sich im Bereich der Punkte 38a, 38b, 38c große radiale Auflageflächen. Die Kräfte werden so besser verteilt. Verschleißerscheinungen, wie sie bei herkömmlichen Ringen auftreten, werden erheblich gemindert. Ein solcher Ring lässt sich kostensparend durch Stanzen oder ähnliche Verfahren herstellen.

### Bezugszeichenliste:

- 1: Gewindezapfen
- 2: Kopfabschnitt
- 3: Längsachse des Gelenkzapfens
- 4: Schaft
- 5: zylinderförmiger Abschnitt
- 6: konusförmiger Abschnitt
- 7: Endabschnitt
- 8: mäanderförmiges Ringband
- 9: Innengewinde
- 10: mittlerer Umfang des Ringbandes
- 11: Auflagefläche
- 12: erstes Bauteil
- 13: zweites Bauteil
- 14: Öffnung des ersten Bauteils
- 15: Öffnung des zweiten Bauteils
- 16: Aufnahmeelement
- 17: Bewegung des Gelenkzapfens relativ zum ersten Bauteil
- 18: Bewegung der Bauteile zueinander
- 19: Kreissegment
- 20: Ausbuchtung
- 21: runder Abschnitt
- 22: Radius des runden Abschnitts
- 23: Sektorwinkel der Kreissegmente
- 24: Sektorwinkel der Ausbuchtungen
- 25: Führungshülse
- 26: ober konischer Abschnitt der Führungshülse
- 27: unterer konischer Abschnitt der Führungshülse
- 28: kreisförmige Nut der Führungshülse
- 29: offener Ring
- 30: linkes Ringende
- 31: rechtes Ringende
- 32: Mittelpunkt des übrigen Rings
- 33: Krümmungsradius des übrigen Rings
- 34: Krümmungsmittelpunkt des rechten Ringendes
- 35: Krümmungsmittelpunkt des linken Ringendes
- 36: Krümmungsradius des rechten Ringendes
- 37: Krümmungsradius des linken Ringendes
- 38a-c: punktförmige Auflageflächen

## Patentansprüche

1. Gewindezapfen zur Verbindung zweier Bauteile (12, 13) mit einem verbreiterten Kopfabschnitt (2) und einem zumindest bereichsweise hohlen Schaft (4), in dem ein Innengewindeabschnitt (9) vorgesehen ist und dessen Außenmantelfläche zumindest abschnittsweise derart konisch ausgebildet ist, dass sich der Außendurchmesser des Schaftes (4) in einer von dem Kopfabschnitt (2) wegweisenden Richtung verjüngt, wobei das dem Kopfabschnitt (2) entfernte Ende des Schaftes (4) mit einem Vorsprung (7) ausgebildet ist, und wobei ein elastisch aufweitbarer, insbesondere mäanderförmiger, Haltering (8, 29) verschiebbar auf dem Schaft (4) vorgesehen ist.

2. Gewindezapfen nach Anspruch 1, **dadurch gekennzeichnet, dass** der Haltering (29) ein offener Ring mit zwei Ringenden (30, 31) ist und dass der Mittelpunkt (32) des Krümmungsradius (33) des Halterings (29) im Bereich der Ringenden (30, 31) gegenüber dem Mittelpunkt (32) des übrigen Halterings (29) versetzt ist und/oder dass die Ringenden (30, 31) einen anderen Krümmungsradius (36, 37) aufweisen als der übrige Haltering (29).

3. Gewindezapfen nach Anspruch 1 oder 2, der zusätzlich eine diesen umgebende Führungshülse (25) aufweist, die zur Anlage an den Kopfabschnitt (2) ausgebildet ist, wobei die Führungshülse (25) eine Ringnut (28) zur Aufnahme des Halterings (8, 29) aufweist.

4. Verschlusseinrichtung zum Verbinden wenigstens zweier Bauteile (12, 13), mit einem Gewindezapfen (1), insbesondere nach einem der vorhergehenden Ansprüche, der an einem ersten Bauteil (12) unverlierbar befestigbar ist, und mit einem an der Rückseite eines zweiten Bauteils (13) anordbaren Aufnahmeelement (16),
wobei der Gewindezapfen (1) einen Kopfabschnitt (2) zur Abstützung an dem ersten Bauteil (12), und einen durch zueinander ausgerichtete Öffnungen (14, 15) der Bauteile (12, 13) hindurchführbaren Schaft (4) zum Einführen in das Aufnahmeelement (16) aufweist,
wobei der Schaft (4) zum Verspannen der Bauteile (12, 13) einen Gewindeabschnitt (9) zum Zusammenwirken mit einem Gegengewindeabschnitt in dem Aufnahmeelement (16) aufweist,
wobei sich der Schaft (4) in Richtung seines vom Kopfabschnitt (2) abgewandten Endes zumindest bereichsweise konusförmig verjüngt und einen radial erweiterten Endabschnitt (7) aufweist, und
wobei zum Verhindern eines vollständigen Herausziehens des Gewindezapfens (1) aus dem ersten Bauteil (12) auf dem Schaft (4) ein Haltering (8, 29) angeordnet ist, der relativ zum Gewindezapfen (1) entlang seiner Längsachse (3) bewegbar ist und in Richtung auf den Kopfabschnitt (2) eine zumindest bereichsweise zunehmende Klemmkraft auf den Gewindezapfen (1) ausübt,
**dadurch gekennzeichnet, dass** der Gewindeabschnitt durch ein in den Schaft (4) eingebrachtes Innengewinde (9) gebildet wird, dass der Gegengewindeabschnitt durch ein auf das Innengewinde (9) abgestimmtes Außengewinde gebildet wird, und dass die äußere Umfangsfläche des Schaftes (4) im Wesentlichen glatt ist.

5. Verschlusseinrichtung nach Anspruch 4, **dadurch gekennzeichnet, dass** in dem Aufnahmeelement (16) eine, insbesondere federbelastete, Blockiereinrichtung zum Erschweren einer relativen Verdrehung zwischen dem Gewindezapfen (1) und dem Aufnahmeelement (16) vorgesehen ist.

6. Verschlusseinrichtung nach einem der Ansprüche 4 oder 5, **dadurch gekennzeichnet, dass** in dem Aufnahmeelement (16) ein Gewindebolzen mit einem Außengewindeabschnitt vorgesehen ist.

7. Verschlusseinrichtung nach einem der Ansprüche 4 bis 6, **dadurch gekennzeichnet, dass** der Haltering (8, 29) vorgespannt auf dem Schaft (4) angeordnet ist.

8. Verschlusseinrichtung nach einem der Ansprüche 4 bis 7, **dadurch gekennzeichnet, dass** der Außendurchmesser des Halterings (8, 29) zumindest dem Außendurchmesser des Kopfabschnitts (2) entspricht.

9. Verschlusseinrichtung nach einem der Ansprüche 4 bis 8, **dadurch gekennzeichnet, dass** der Außendurchmesser des Kopfabschnitts (2) im Wesentlichen dem Innendurchmesser des Aufnahmeelements (16) entspricht, so dass dieser den Kopfabschnitt (2) im verspannten Zustand der Bauteile (12, 13) eng umschließt.

10. Verschlusseinrichtung nach einem der Ansprüche 3 bis 9, **dadurch gekennzeichnet, dass** der Haltering (29) ein offener Ring mit zwei Ringenden (30, 31) ist und dass der Mittelpunkt (32) des Krümmungsradius (33) des Halterings (29) im Bereich der Ringenden (30, 31) gegenüber dem Mittelpunkt (32) des übrigen Halterings (29) versetzt ist und/oder dass die Ringenden (30, 31) einen anderen Krümmungsradius (36, 37) aufweisen als der übrige Haltering (29).

11. Verschlusseinrichtung nach einem der Ansprüche 3 bis 9, **dadurch gekennzeichnet, dass** der Haltering (8) in Form eines mäanderförmig verlaufenden, vorzugsweise offenen Ringbandes ausgebildet ist.

12. Verschlusseinrichtung nach Anspruch 11, **dadurch gekennzeichnet, dass** das Ringband über wenigstens vier im Wesentlichen als Kreissegmente (19) ausgebildete Abschnitte verfügt, dass die Kreissegmente (19) durch gleichmäßig über den Umfang des Halterings verteilte, radial nach außen vorspringende Ausbuchtungen (20) verbunden sind, und dass sich die Ausbuchtungen (20) im Wesentlichen gradlinig nach außen erstrecken und durch einen Abschnitt (21) geschlossen werden, der einen konstanten Innen- und/oder Außenradius aufweist.

13. Verschlusseinrichtung nach Anspruch 12, **dadurch gekennzeichnet, dass** die Summe der Sektorwinkel (23), die kreisförmig um den Mittelpunkt (M) des Ringbandes von den Kreissegmenten (19) beansprucht wird, größer ist als die Summe der Sektorwinkel (24), die von den Ausbuchtungen (20) beansprucht wird.

14. Verschlusseinrichtung nach einem der Ansprüche 4 bis 13, **dadurch gekennzeichnet, dass** der Außendurchmesser des Endabschnitts (7) größer ist als der Innendurchmesser des Halterings (8, 29).

15. Verschlusseinrichtung nach einem der Ansprüche 4 bis 14, **dadurch gekennzeichnet, dass** der Haltering (8, 29) im verbundenen Zustand der Bauteile (12, 13) zwischen diesen axial eingespannt ist.

16. Verschlusseinrichtung nach einem der Ansprüche 4 bis 15, **dadurch gekennzeichnet, dass** der Schaft (4) einen zylinderförmigen Abschnitt (5) aufweist, dessen Länge derart bemessen ist, dass die Öffnung (15) des zweiten Bauteils (13) im verspannten Zustand der Bauteile (12, 13) den zylinderförmigen Abschnitt umgibt.
